## Europäisches Patentamt
## European Patent Office
## Office européen des brevets

(19)

(11) Veröffentlichungsnummer: **0 203 318**
**B1**

(12) # EUROPÄISCHE PATENTSCHRIFT

(45) Veröffentlichungstag der Patentschrift:
**25.10.89**

(51) Int. Cl.⁴: **B 01 D 13/00**

(21) Anmeldenummer: **86104636.5**

(22) Anmeldetag: **04.04.86**

(54) **Trennzelle für die Druckfiltration und Umkehrosmose.**

(30) Priorität: **28.05.85 DE 3519060**

(43) Veröffentlichungstag der Anmeldung:
**03.12.86 Patentblatt 86/49**

(45) Bekanntmachung des Hinweises auf die Patenterteilung:
**25.10.89 Patentblatt 89/43**

(84) Benannte Vertragsstaaten:
**AT BE CH DE FR GB IT LI LU NL SE**

(56) Entgegenhaltungen:
**DE-A-2 753 864**
**US-A-3 495 943**
**US-A-3 556 302**
**US-A-3 560 377**
**US-A-4 411 792**

**Die Akte enthält technische Angaben, die nach
dem Eingang der Anmeldung eingereicht wurden
und die nicht in dieser Patentschrift enthalten sind.**

(73) Patentinhaber: **Amafilter Membrantechnik GmbH,
Vahrenwalderstrasse 7, D-3000 Hannover 1 (DE)**

(72) Erfinder: **Kohlheb, Robert, Dr., Andershäuser
Strasse 15, D-3352 Einbeck (DE)**
Erfinder: **Rautenbach, Robert Prof. Dr.- Ing., T.-
Hochschule Aachen Turmstrasse 46, D-5100
Aachen (DE)**

(74) Vertreter: **Köster, Hajo, Dr., Jaeger, Steffens,
Lorenz & Köster Patentanwälte Pippinplatz 4a
Postfach 1620, D-8035 Gauting (DE)**

EP 0 203 318 B1

## Beschreibung

Die Erfindung betrifft eine eine Trennzelle zur Druckfiltration und Umkehrosmose.

Da die die Trennzelle gemäß der Erfindung sowohl für Filtrations- als auch Permeationsprozesse verwendet werden kann, ist der Begriff "Filtrat" hier auch im Sinne von "Permeat" verwendet.

Die bereits bekannten Trennzellen für die Druckfiltration und Umkehrosmose bestehen aus einem zweiteiligen Druckgehäuse, wobei zwischen Gehäuseober- und Gehäuseunterteil eine durch eine Filterunterstützung abgestützte Membran eingelagert ist, an die ein zu dieser Membran hin geöffneter Strömungskanal anliegt, dessen Enden mit einem Zulaufstutzen und Konzentratablaufstutzen verbunden sind.

Das Filtrat wird durch einen mit der Rückseite der Membran verbundenen Kanal abgeleitet. Durch den Zulaufstutzen wird das Stoffgemisch senkrecht auf die Membran geleitet, während es über den Konzentratablaufstutzen ebenfalls senkrecht von der Membran weggeleitet wird. Um die Membran vor Abnutzung durch das einströmende Fluid zu schützen, sind Prallbleche zwischen Zulaufstutzen und Membran angebracht. Der an der Membran anliegende Strömungskanal lenkt das Fluid in spiralförmiger Bahn über die Membran. Da die Strömung im spiralförmigen Strömungskanal Zentrifugalkräften ausgesetzt ist, bilden sich Sekundärströmungen aus, die den Filtrations- bzw. Permeationsprozeß leistungsmindernd beeinflussen. Auch treten bei der Ultrafiltration und Mikrofiltration Entmischungen zwischen Trägerfluid und suspendierten Partikeln auf, sofern Dichteunterschiede zwischen Partikeln und Fluid existieren, die zu Polarisationserschleinungen und zu Ablagerungen auf der Membranoberfläche führen. Ablagerungen verursachen Verstopfungen, welche die Durchsatzfähigkeit der Membran vermindern und die Einsatzdauer der Trennzellen verkürzen.

Der Erfindung liegt daher die Aufgabe zugrunde, eine leistungsfähige Trennzelle zu schaffen, die als Test-Trennzelle geeignet ist, so daß sie zu Testzwecken eine realitätsnahe Membranüberströmung ermöglicht.

Gelöst wird diese Aufgabe. durch eine Trennzelle für die Druckfiltration und Umkehrosmose, bestehend aus einem flachen, zweiteiligen Druckgehäuse, dessen beide Teile druckfest und fluiddicht miteinander verbindbar sind, wobei im anströmseitigen Gehäuseteil ein Zulaufstutzen und ein Konzentratablaufstutzen und im filtratseitigen Gehäuseteil ein Filtratablaufstutzen vorgesehen sind, mit einer zwischen beiden Gehäuseteilen eingespannten Membran, an welcher filtratseitig eine poröse Membranauflage und anströmseitig eine Strömungsführungsplatte mit einem Kanal unmittelbar anliegen, wobei der Kanal an einem seiner beiden Enden mit dem Zulaufstutzen und am anderen Ende mit dem Konzentratablaufstutzen mediendurchlässig verbunden ist, die dadurch gekennzeichnet ist, daß der Kanal der Strömungsführungsplatte die Konfiguration einer mäanderförmigen Wendespirale aufweist und daß der Zulaufstutzen und der Konzentratablaufstutzen peripher auf der Strömungsführungsplatte angeordnet sind, insbesondere diametral gegenüberliegen.

Die erfindungsgemäße Trennzelle kann sowohl für die Mikrofiltration oder für die Ultrafiltration als auch für die Umkehrosmose eingesetzt werden, sowie in den Bereichen der Fest-Flüssig, Flüssig-Flüssig und Gas-Gas-Trennung zum Einsatz kommen. Bei entsprechender Werkstoffwahl ist die erfindungsgemäße Trennzelle bis zu einem Arbeitsdruck von gut 20000 kPa und bei einer Arbeitstemperatur von bis zu 150°C einsetzbar.

Bei der erfindungsgemäßen Trennzelle werden einerseits Sekundarströmungen des Fluids auf der Membranoberfläche ausgeschlossen und andererseits eine Polarisation sowie Ablagerungen auf der Membran vermieden.

Mit der erfindungsgemäßen Trennzelle können Bedingungen simuliert werden, wie sie beispielsweise im einem Rohmodul, in einem Plattenmodul oder auch in einem Wickelmodul vorliegen.

Die eingangs genannte Aufgabe der vorliegenden Erfindung wird mit anderen Worten im wesentlichen durch den Einsatz einer konstruktiv besonders gestalteten Strömungsplatte gelöst. Diese enthält membranseitig einen mehrfach gewundenen Strömungskanal, der mäanderförmig (S-förmig) gewunden ist.

Mit dieser Konstruktion wird innerhalb des Raumes, der von der als genormt anzusehenden Membransonde vorgegeben ist, ein zwangsdurchströmter Kanal für die zu trennende Lösung geschaffen, der zwar zwei Umlenkungen enthält, trotzdem aber in seinem Verhalten einen geraden Kanalrelativ genau nachbildet. Ursache hierfür ist, daß die Umlenkungen gegenläufig angeordnet sind, so daß nach der ersten Umlenkung eine äußere Stromlinie zu einer inneren wird und umgekehrt. Die Trennzelle ist damit in der Lage, zuverlässige Aussagen über die zu erwartenden Flüsse und Membranverblockungen bei technischen Modulen wie Rohr-und Plattenmodulen zu liefern, vorausgesetzt selbstverständlich, daß die Versuche mit demselben Membranmaterial durchgeführt werden, wie sie der technische Membranmodul enthält. Soll das Verhalten von Wickelmodulen vorhergesagt werden, so muß in den Kanal der hier beschriebenen Trennzelle ein flächiger Abstandshalter mit maschenartiger Struktur, beispielsweise ein Kunststoffgewirk, wie es an der Zulaufseite von Wickelmodulen verwendet wird, eingelegt werden. An dem einen Ende der Wendespirale ist der Auslauf zum Konzentratablaufstutzen und am anderen Ende der Wendespirale der Einlauf vom Zulaufstutzen mediendurchlässig ausgebildet. Beide Stutzen sind vorzugsweise diametral zueinander angeordnet und verlaufen etwa senkrecht zur Strömungsführungsplatte.

Dabei sind die membranseitigen Öffnungen des Zulaufstutzens und des Konzentratablaufstutzens so gestaltet, daß das Fluid parallel zur Membran ausströmt und das Konzentrat ebenfalls parallel zur Membran in den Konzentratablaufstutzen einströmt. Ein Zulaufstutzen mit einer solchen Anströmcharakteristik ist vorzugsweise so ausgebildet, daß der axial ausgehöhlte Stutzen seitlich angeschnitten ist, und zwar dergestalt, daß der nicht angeschnittene Boden der Sacklochbohrung des Stutzens als Umlenkplatte für das einströmende Medium dient. Der Konzentratablaufstutzen kann einen gleichartig geformten Strömungskanal enthalten. Mit der hier beschriebenen Ausführung des Kanales im Zulauf- bzw. Konzentratablaufstutzen läßt sich eine besondere Belastung der Membran an der Eintritts- bzw. Austrittsstelle des Strömungskanals vermeiden. Dieses Konstruktionsmerkmal wirkt sich auf die Funktionsdauer der Membran positiv aus. Als Membranauflage wird eine poröse, druckstabile Platte, vorzugsweise eine Scheibe aus Sintermaterial verwendet. Sowohl Glassinterplatten, Metallsinteral auch Kunststoffsinterplatten können hier Anwendung finden. Das an der porösen Sinterplatte filtratseitig anliegende Gehäuseteil enthält in seiner Innenwand ein Rillensystem, welches direkt mit dem Strömungskanal des Filtrationsstutzens medienleitend verbunden ist. Als eine bevorzugte Variante erweist sich dabei ein Rillensystem, welches sich kombiniert aus radialen Rillen und aus spiralförmigen Rillen zusammensetzt. Das Filtrat wird entweder durch diese Rillen zum Filtratstutzen abgeführt oder es strömt direkt durch die poröse Membranauflage in den Filtratstutzen ein. Da der filtratseitige Gehäuseteil und die Membranauflage miteinander verschraubbar sind, können diese Teile auf die Membran aufgesetzt werden, ohne daß eine Gefahr der Membranbeschädigung besteht. Die Verschraubung kann beispielsweise mittels einer durch den Filtratablaufstutzen hindurchgreifenden Schraube erfolgen, die einen oder mehrere Kanäle für den Durchtritt des Permeates bzw. Filtrates aus dem Innenraum der Trennzelle in den Filtratablaufstutzen freiläßt.

Die Membran der Trennzelle kann aus jedem Material bestehen, das in herkömmlichen Trennzellen verwendet wird; daher werden hier keine Membranmaterialien angeführt.

Die Strömungsführungsplatte besteht vorzugsweise aus Stahl oder Kunststoff, insbesondere aus Polyvinylidenfluorid, Polycarbonat oder Polytetrafluorethylen. Die beiden Druckgehäuseteile bestehen ebenfalls vorzugsweise aus Stahl oder aus Kunststoff, insbesondere aus Polyvinylidenfluorid.

Die druckfeste und fluiddichte Verbindung von anströmseitigem und filtratseitigem Druckgehäuseteil wird durch eine in das filtratseitige Druckgehäuseteil einlegbare Ringmutter mit Außengewinde hergestellt, die in ein Innengewinde einer die beiden Druckgehäuseteile umfassenden Hülse eingreift.

Die Erfindung wird anhand schematischer Zeichnungen eines Ausführungsbeispieles näher erläutert. Es zeigt:

Fig. 1    die ganze Trennzelle im Querschnitt
Fig. 2    die Strömungsführungsplatte in Draufsicht.

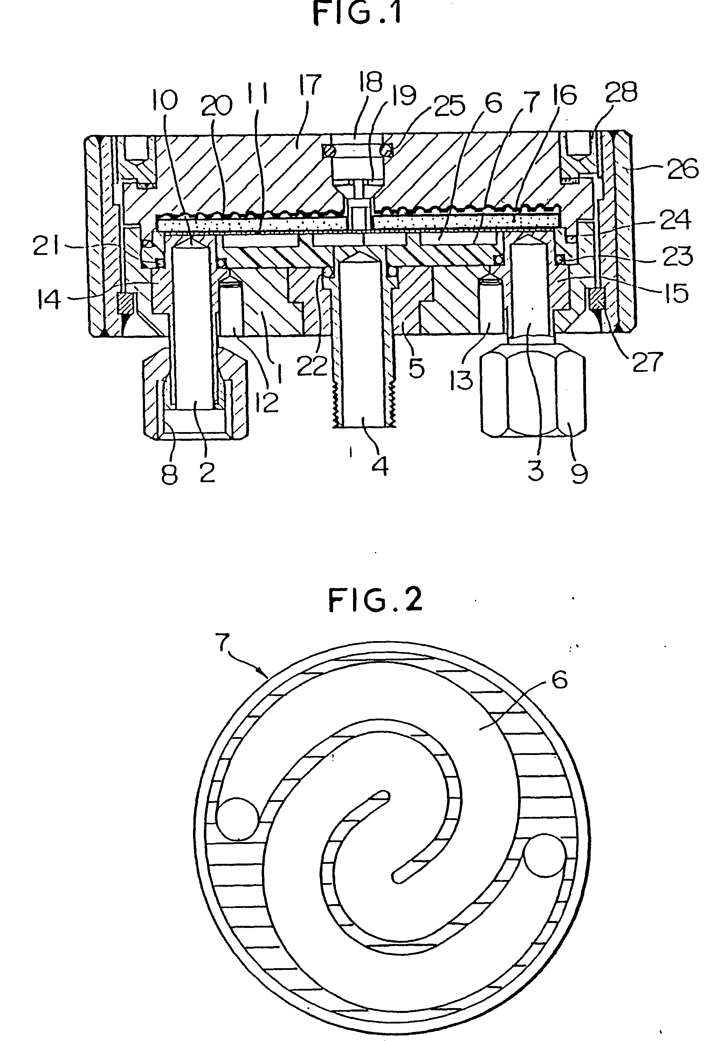

In den Boden des in Fig. 1 gezeigten anströmseitigen Druckgehäuseteiles 1 sind Zulaufstutzen 2, Konzentratablaufstutzen 3 und ein in einem Einsatz 5 befindlicher Stutzen 4, durch den eine Sonde zur Temperaturmessung im Strömungskanal 6 der Strömungsführungsplatte 7 eingeführt werden kann, paßgenau eingefügt. An den Zulaufstutzen 2 und den Konzentratablaufstutzen 3 lassen sich Schläuche für den Zulauf und für den Konzentratablauf über ein Schraubgewinde 8 bzw. 9 anschrauben. Die drei Stutzen 2, 3 und 4 sind in die Strömungsplatte 7 so eingesteckt, daß sich die Bohrungen der Stutzen 2, 3 und 4 in den Strömungskanal 6 hineinöffnen. Der Bohrungsboden 10 des Zulaufstutzens 2 läuft spitz zu und ist im Bodenbereich so angebohrt, daß das Fluid parallel zur Membranoberfläche in den Strömungskanal 6 einströmt. Entsprechend sind die strömungskanalseitigen Öffnungen der Stutzen 3 und 4 ausgebildet. Durch das Umlenken des Fluids in den Strömungskanälen 6 wird verhindert, daß sich die Membran 11 in Folge von übergroßer mechanischer Beanspruchung vorzeitig abnutzt. Die flanschartigen Verdickungen 14 bzw. 15 des Zulaufstutzens 2 bzw. des Konzentratablaufstutzens 3 sorgen in Verbindung mit den in diese Verdickungen eingreifenden Stifte 12 bzw. 13 dafür, daß die Stutzen verdrehungssicher fixiert sind.

Mit ihrer anströmseitigen Oberfläche liegt die Membran 11 an der Strömungsführungsplatte 7 an und bildet so eine Wand des Strömungskanals 6. An der filtratseitigen Oberfläche der Membran liegt eine Membranauflage 16 an, die mit dem filtratseitigen Gehäuseteil 17 mittels der in den Filtratstutzen 18 eingesetzten Schraube 19 verschraubt werden kann. Der filtratseitige Gehäuseteil und die Membranauflage 16 können daher in einem Arbeitsgang so auf die Membran 11 aufgesetzt werden, daß die Gefahr einer Membranschädigung vermieden werden kann. Die Schraube 19 enthält Hohlräume, durch die das Filtrat aus der porösen Membranauflage und dem Rillensystem in den Filtratstutzen 18 einströmen kann. Die nach innen weisende Oberfläche des filtratseitigen Gehäuseteils 17 enthält ein Rillensystem 20, das vorzugsweise aus radialen Rillen und spiralförmig verlaufenden Rillen besteht. Das Filtrat kann auf dem Weg durch dieses Rillensystem in den Filtratstutzen 18 gelangen. Dieses Rillensystem begünstigt den raschen Stofftransport aus dem Inneren der Trennzelle in den Filtratstutzen hinein.

Die Abdichtung der Trennzelle in ihrem anströmseitigen Teil erfolgt durch auf die Stutzen aufgesetzte Dichtungsringe 21, 22, 23. Der Dichtungsring 24 hat die Funktion, die Strömungsführungsplatte 7 zum filtratseitigen Gehäuseteil 17 hin abzudichten. Der Filtratstutzen 18 wird ebenfalls durch einen Dichtungsring 25 abgedichtet.

Die Trennzelle wird von einer doppelmanteligen verschweißten Stahlhülse 26 umschlossen, wobei der Boden des anströmseitigen Gehäuseteils 1 auf einem Anschlagring 27 aufliegt. Die Trennzelle wird mittels einer Ringmutter 28 druckfest und fluiddicht verschlossen.

Die charakteristische Konfiguration des in der Strömungsführungsplatte 7 befindlichen Strömungskanals 6 läßt Fig. 2 erkennen. Der Strömungskanal ist in der Art einer mäanderförmigen Wendespirale geformt. Damit erreicht man eine realitätsnahe Membranüberströmung, wie sie etwa im Rohr-, Platten- oder Wickelmodul vorhanden ist.

In der hier beschriebenen Ausgestaltung der Erfindung bestehen die Gehäuseteile 1 und 17 aus Stahl und die Strömungsführungsplatte 7 aus Polyvinylidenfluorid. Bei der Membranauflage 16 handelt es sich um eine Glassinterplatte.

Diese Trennzelle kann bei Temperaturen bis zu 150°C und im Mitteldruckbereich von bis zu ungefähr 6.000 kPa verwendetwerden. Bei entsprechender Werkstoffwahl kann die Trennzelle bei im wesentlichen gleicher Konstruktion jedoch auch bis in den Hochdruckbereich von deutlich über 20.000 kPa Anwendung finden.

**Patentansprüche**

1. Trennzelle für die Druckfiltration und Umkehrosmose, bestehend aus einem flachen, zweiteiligen Druckgehäuse, dessen beide Teile druckfest und fluiddicht miteinander verbindbar sind, wobei im anströmseitigen Gehäuseteil (1) ein Zulaufstutzen (2) und ein Konzentratablaufstutzen (3) und im filtratseitigen Gehäuseteil (17) ein Filtratablaufstutzen (18) vorgesehen sind, mit einer zwischen beiden Gehäuseteilen eingespannten Membran (11), an welcher filtratseitig eine poröse Membranauflage (16) und anströmseitig eine Strömungsführungsplatte (7) mit einem Kanal (6) unmittelbar anliegen, wobei der Kanal (6) an einem seiner beiden Enden mit dem Zulaufstutzen (2) und am anderen Ende mit dem Konzentratablaufstutzen (3) mediendurchlässig verbunden ist,

dadurch gekennzeichnet,

daß der Kanal (6) der Strömungsführungsplatte (7) die Konfiguration einer mäanderförmigen Wendespirale aufweist und daß der Zulaufstutzen (2) und der Konzentratablaufstutzen (3) peripher auf der Strömungsführungsplatte (7) angeordnet sind, insbesondere diametral gegenüberliegen.

2. Trennzelle nach Anspruch 1,

dadurch gekennzeichnet,

daß der Strömungskanal (10) des Zulaufstutzens (2) an seinem Ausfluß zum Kanal der Strömungsführungsplatte (7) so gekrümmt oder abgewinkelt gestaltet ist, daß das Fluid die Membran (11) parallel zu deren Oberfläche anströmt.

3. Trennzelle nach Anspruch 1 oder 2,

dadurch gekennzeichnet,

daß der Strömungskanal des Konzentratablaufstutzens (3) am Übergang zum Kanal (6) der Strömungsführungsplatte (7) so gekrümmt oder abgewinkelt ausgestaltet ist, daß das Konzentrat parallel zur Oberfläche der Membran (11) in den Konzentratablaufstutzen (3) einströmt.

4. Trennzelle nach einem der Ansprüche 1 bis 3,

dadurch gekennzeichnet,

daß die Membranauflage (16) eine poröse, druckstabile Platte ist, die vorzugsweise aus Sintermaterial besteht, an welcher filtratseitig das Druckgehäuseteil (17) anliegt, welches an seiner Innenwand mit einem Rillensystem (20) durchsetzt ist, das medienleitend mit dem Filtratablaufstutzen (18) verbunden ist.

5. Trennzelle nach Anspruch 4,

dadurch gekennzeichnet,

daß Membranauflage (16) und filtratseitiges Gehäuseteil (17) mittels einer durch den Filtratablaufstutzen (18) hindurchgreifenden Schraube (19) verschraubbar sind, wobei diese Schraubverbindung Kanäle für den Durchtritt des Permeates bzw. Filtrates aus dem Innenraum der Trennzelle in den Filtratablaufstutzen (18) freiläßt.

6. Trennzelle nach Anspruch 4,

dadurch gekennzeichnet,

daß das Rillensystem (20) der Innenwand des Druckgehäuseteiles (17) aus einem kombinierten System von radial verlaufenden Rillen und spiralförmigen Rillen besteht.

7. Trennzelle nach einem der Ansprüche 1 bis 6,

dadurch gekennzeichnet,

daß die Strömungsführungsplatte aus Kunststoff, vorzugsweise aus Polyvinylidenfluorid, Polycarbonat oder Polytetrafluorethylen besteht.

8. Trennzelle nach einem der Ansprüche 1 bis 7,

dadurch gekennzeichnet,

daß die beiden Gehäuseteile (1, 17) aus Stahl oder Kunststoff, insbesondere aus Polyvinylidenfluorid, bestehen.

9. Trennzelle nach einem der Ansprüche 1 bis 8,

dadurch gekennzeichnet,

daß die beiden Gehäuseteile paßgenau in eine Stahlhülse (26) einsetzbar und in dieser mittels einer in die Hülse einschraubbaren Ringmutter (28) druckfest und fluiddicht miteinander verbindbar sind.

10. Trennzelle nach einem der Ansprüche 1 bis 9,

dadurch gekennzeichnet,

daß in den mäanderförmigen Kanal zur Simulation der Strömungsverhältnisse in einem Wickelmodul ein flächiger Abstandshalter aus maschenartigem Material eingelegt ist.

## Claims

1. A separator cell for pressure filtration and reverse osmosis consisting of a flat two-part pressure-resistant housing, the two housing parts of which can be connected pressure-resistantly and fluid-tightly, whereat the first housing part (1), which is upstream with respect to a diaphragm-type filter element (11), which is fixed between the two housing parts, comprises a feed pipe (2) and a discharge pipe (3) for the concentrated fluid and the second housing part (17), which is downstream with respect to the diaphragm-type filter element, comprises a discharge pipe (18) for the filtrate, whereat a porous supporting member (16) sits close to the downstream side and a flow conducting plate (7) comprising a channel (6) sits close to the upstream side of the diaphragm-type filter element (11), whereat the channel (6) is connected fluid-perviously at one end to the feed pipe (2) and at the other end to the discharge pipe (3) for the concentrated fluid, characterized by that the channel (6) inside the flow conducting plate (7) is shaped like a meandrically-shaped spiral changing its direction and that the feed pipe (2) and the discharge pipe (3) are arranged near the peripheral edges of the flow conducting plate (7), especially diametrically opposite each other.

2. A separator cell according to claim 1, characterized by that the flow channel (10) inside the feed pipe (2) is curved or bent at its outlet side to the channel of the flow conducting plate (7) such that the flow direction of the fluid is parallel to the surface of the diaphragmtype filter element (11).

3. A separator cell according to one of the claims 1 or 2, characterized by that the flow channel inside the discharge pipe (3) for the concentrated fluid is curved or bent at its outlet side to the channel (6) of the flow conducting plate (7) such that the flow direction of the concentrated fluid streaming into the discharge pipe (3) is parallel to the surface of the diaphragm-type filter element (11).

4. A separator cell according to one of the claims 1 to 3, characterized by that the member (16) supporting the diaphragm-type filter element is a plate-type member made of a porous and pressure-resistant material, preferably of a sintered material, onto which downstream the housing part (17) of the pressure-resistant housing sits close, which housing part (17) comprises at its inner wall a system of groove-type channels (20), which system is connected fluid-conductingly to the discharge pipe (18) for the filtrate.

5. A separator cell according to claim 4, characterized by that the member (16) supporting the diaphragm-type filter element and the housing part (17) being downstream can be connected by a bolt (19) extending through the discharge pipe (18) for the filtrate, whereat this bolt connection provides channels for the permeate or the filtrate, respectively, such that the permeate or the filtrate, respectively, can flow from inside the separator cell into the discharge pipe (18) for the filtrate.

6. A separator cell according to claim 4, characterized by that the system of groove-type channels (20) at the inner wall of the housing part (17) of the pressureresistant housing consists of a combination of radially extending groove-type channels and of spiral-shaped groove-type channels.

7. A separator cell according to one of the claims 1 to 6, characterized by that the flow conducting plate is made of plastics, preferably of polyvinylidenfluoride, polycarbonate or polytetrafluoroethylene.

8. A separator cell according to one of the claims 1 to 7, characterized by that the two housing parts (1, 17) are made of steel or plastics, especially of polyvinylidenfluoride.

9. A separator cell according to one of the claims 1 to 8, characterized by that the two housing parts can be inserted exactly fitting into a steel sleeve (26) and that they can be connected pressure-resistantly and fluid-tightly by a ring-type nut (28), which can be threaded into the steel sleeve.

10. A separator cell according to one of the claims 1 to 9, characterized by that a sheet-type distance member made of a mesh-type material is inserted into the meander-shaped channel serving for simulating the flow characteristics of a coil unit.

## Revendications

1. Cellule de séparation pour filtration sous pression et osmose inverse, constituée d'un boîtier plat, en deux parties, résistant à la pression, dont les deux parties peuvent être réunies ensemble d'une façon résistant à la pression et étanche aux fluides, pour lequel sont prévues, dans la partie du boîtier située côté arrivée (1), une canalisation d'arrivée (2) et une canalisation de départ (3) du concentrat et, dans la partie du boîtier située côté filtrat (17), une canalisation de départ (18) du filtrat, comportant une membrane (11), sur laquelle sont placés directement, côté filtrat, un revêtement de membrane (16) poreux et, côté arrivée du courant, une plaque de guidage de l'écoulement (7) comportant un canal (6), le canal (6) étant relié de façon à pouvoir être traversé par le médium, à l'une de ses deux extrémités, avec la canalisation d'arrivée (2) et, à l'autre extrémité, avec la canalisation de départ (3) du concentrat,

caractérisée en ce que

le canal (6) de la plaque de guidage de l'écoulement (7) présente la configuration d'une spirale hélicoïdale formant des méandres, et en ce que la canalisation d'arrivée (2) et la canalisation de départ (3) du concentrat sont disposées sur la plaque de guidage de l'écoulement (7), à la périphérie, en particulier sont situées dans des positions diamétralement opposées.

2. Cellule de séparation suivant la revendication 1, caractérisée en ce que le canal de circulation (10) de la canalisation d'arrivée (2), au point où elle débouche dans le canal, est exécutée avec un coude ou une déviation telle que le fluide arrive sur la membrane (11) parallèlement à la surface externe de celle-ci.

3. Cellule de séparation suivant la revendication 1 ou 2, caractérisée en ce que le canal de circulation de la canalisation de départ (3) du concentrat, au point où il débouche dans le canal (6) de la plaque de guidage de l'écoulement (7), est exécuté avec un coude ou une déviation telle que le concentrat arrive dans la canalisation de départ (3) du concentrat parallèlement à la surface externe de la membrane (11).

4. Cellule de séparation suivant l'une quelconque des revendications 1 à 3, caractérisée en ce que le revêtement de membrane (16) est une plaque poreuse, résistant à la pression, constituée de préférence en matériau fritté, contre laquelle est placée, côté filtrat, la partie (17) du boîtier résistant à la pression, qui, sur sa paroi interne, est entrelacée d'un réseau de rainures (20), qui est raccordé à la canalisation de départ du filtrat (18).

5. Cellule de séparation suivant la revendication 4, caractérisée en ce que le revêtement de membrane (16) et la partie du boîtier située côté filtrat (17) peuvent être vissés au moyen d'une vis (19) traversant la canalisation de départ du filtrat (18), cette liaison par vis laissant libre des canaux pour le passage du perméat, ou du filtrat, de la chambre intérieure de la cellule de séparation dans la canalisation de départ du filtrat (18).

6. Cellule de séparation suivant la revendication 4, caractérisée en ce que le réseau de rainures (20) est constitué de rainures dirigées radialement et de rainures en forme de spirales.

7. Cellule de séparation suivant l'une quelconque des revendications 1 à 6, caractérisée en ce que la plaque de guidage de l'écoulement est réalisée de matière plastique, de préférence en fluorure de polyvinylidène, en polycarbonate ou en polytétrafluoréthylène.

8. Cellule de séparation suivant l'une quelconque des revendications 1 à 7, caractérisée en ce que les deux partie du boîtier (1, 17) sont constituées d'acier ou de matière plastique, en particulier de fluorure de polyvinylidène.

9. Cellule de séparation suivant l'une quelconque des revendications 1 à 8, caractérisée en ce que les deux partie du boîtier (1, 17) peuvent être ajustées dans un manchon en acier (26) et peuvent être assemblées dans celui-ci d'une façon résistant à la pression et étanche aux fluides, au moyen d'un anneau fileté (28) que l'on peut visser dans le manchon.

10. Cellule de séparation suivant l'une quelconque des revendications 1 à 9, caractérisée en ce que, dans le canal formant des méandres, est placé, dans un module d'enroulement, un écarteur plat, en matériau à mailles, pour la simulation des conditions d'écoulement.

# FIG.1

# FIG.2